# EUROPÄISCHE PATENTANMELDUNG

(11) **EP 1 417 879 A1**
(43) Veröffentlichungstag der Anmeldung: **12.05.2004**
(21) Anmeldenummer: 03022017.2
(22) Anmeldetag: 01.10.2003
(51) Int. Cl.: A01D 89/00

(54) **Gutaufnehmer**

(30) Priorität: 07.11.2002 DE 10251827
(71) Anmelder: DEERE & COMPANY, Moline, Illinois 61265-8098 (US)
(72) Erfinder: Derscheid, Daniel Eric, Ottumwa IA 52501 (US)
(74) Vertreter: Magin, Ludwig Bernhard

(57) **Zusammenfassung**

1. Gutaufnehmer
2.1. Bekannte Gutaufnehmer weisen wenigstens einen Aufnehmerrotor sowie ggf. eine oder mehrere stromaufwärts angeordnete Niederhalterwalzen bzw. -rotoren auf. Diese Anordnungen können eine Verstopfung des geförderten Erntegutes nicht zuverlässig verhindern.
2.2. Es wird ein Gutaufnehmer (30) vorgeschlagen, dem stromaufwärts ein rotierender Niederhalterrotor (32) zugeordnet ist, der wenigstens einen zumindest bis an ein seitliches Ende des Gutaufnehmers (30) reichenden Außenabschnitt (42) aufweist. Der wenigstens eine Außenabschnitt (42) umfasst eine Querfördereinrichtung zur Erzeugung einer dem seitlichen Ende des Gutaufnehmers (30) entgegengesetzten axialen Bewegungskomponente für gefördertes Gut.
2.3. Derartige Gutaufnehmer werden in der Landwirtschaft eingesetzt.

## Beschreibung

Die Erfindung betrifft einen Gutaufnehmer mit einem Niederhalterrotor, insbesondere für eine landwirtschaftliche Maschine.

Ein Gutaufnehmer für eine mobile Ballenpresse ist in der US 40 15 410 beschrieben. Stromaufwärts des Gutaufnehmers ist eine vom Erntegut in Rotation versetzte Niederhaltewalze angeordnet, die das aufzunehmende Erntegut nach unten drückt und verhindern soll, dass der über Kopf arbeitende Gutaufnehmer das Erntegut durch seine Rotation nach vorne wirft. Ein Gutaufnehmer für Erntemaschinen ist auch aus der DE 39 22 695 A1 bekannt, der einen über Kopf arbeitenden, rotierenden Gutaufnehmer aufweist. Zur Ablenkung eines Gutflusses sind dem Aufnehmer eine Niederhalterwalze sowie eine Leitwalze zugeordnet, die vor bzw. oberhalb einer Aufsammeltrommel drehbar angeordnet sind.

Eine Aufnahmeeinrichtung einer landwirtschaftlichen Erntemaschine ist weiterhin aus der DE 197 50 954 A1 bekannt, bei der vor bzw. schräg oberhalb einer über Kopf arbeitenden Aufnahmetrommel zwei Niederhaltetrommeln vorgesehen sind, die das aufzunehmende Erntegut in einen Bereich über der Aufnahmetrommel lenken und verhindern sollen, dass das geförderte Erntegut zwischen einer Schneidtrommel und der Aufnahmewalze zu Verstopfungen führen kann. Eine Erntegutpresse mit einem frontseitigen Aufnehmer ist schließlich aus der EP 0 470 356 B1 bekannt. Hierbei sind einer drehbaren Aufnahmewalze eine Reihe von Niederhaltezinken zugeordnet, zwischen denen an der Aufnahmewalze befestigte Zinken hindurchstreichen und die für eine Verdichtung des Erntegutes oberhalb der über Kopf fördernden Aufnahmevorrichtung sorgen sollen.

Das der Erfindung zu Grunde liegende Problem wird darin gesehen, einen zuverlässig fördernden Gutaufnehmer mit geringen erforderlichen Antriebskräften während des Betriebs vorzuschlagen.

Dieses Problem wird erfindungsgemäß durch die Lehre des Patentanspruchs 1 gelöst, wobei in den weiteren Patentansprüchen Merkmale aufgeführt sind, welche die Lösung in vorteilhafter Weise weiterentwickeln.

Mit Hilfe von einer an wenigstens einem Außenabschnitt eines Niederhalterrotors vorgesehenen Querfördereinrichtung kann jederzeit eine Verstopfung des Gutaufnehmers verhindert werden, da der Niederhalterrotor nicht nur für einen störungsfreien Gutfluss in Förderrichtung sorgt, sondern eine zusätzliche axiale Förderkomponente aufweist, die das Erntegut in eine axiale Richtung fördert. An den äußeren Rändern des Gutaufnehmers sind hierzu Querfördereinrichtungen vorgesehen, die dem Erntegut eine axiale Bewegungsrichtung in Richtung vom Rand bzw. von den seitlichen Rändern weg geben. Hierzu ist es sinnvoll, wenn der Niederhalterrotor einen zumindest bis an ein seitliches Ende des Gutaufnehmers reichenden Außenabschnitt aufweist, an dem die Querfördereinrichtung zur Erzeugung einer axialen Bewegungskomponente für gefördertes Gut angeordnet ist. Typischerweise weist der Niederhalterrotor ungefähr eine gleiche Arbeitsbreite auf wie der Pick-Up des Gutaufnehmers, so dass jederzeit ein störungsfreier Betrieb gewährleistet ist. Eine wichtige Funktion des mit den Querfördereinrichtungen versehenen Niederhalterrotors besteht darin, ein Verfangen von Erntegut in den Seitenbereichen des Erntegutaufnehmers zu verhindern.

Insbesondere kann mit dem erfindungsgemäßen Niederhalterrotor gewährleistet werden, dass das Erntegut sich nicht an den Seitenbereichen des Erntegutaufnehmers verfangen kann.

Die Querfördereinrichtungen können insbesondere als in Form jeweils einer Schnecke gehaltene Außenabschnitte oder als spiralförmig angeordnete Stege ausgebildet sein. Um auch in einem mittleren Bereich die Gutförderung zu verbessern, kann ein Mittenabschnitt ohne Querfördereinrichtungen, jedoch mit Mitnehmern ausgestattet sein. Als derartige Mitnehmer kommen insbesondere Zinkenstege, Finger oder Rippen o. dgl. in Frage. Der Niederhalterrotor kann aktiv angetrieben sein, oder wahlweise vom Gutstrom in Rotation versetzt werden. Die im Mittenbereich angeordneten Mitnehmer sorgen hierbei jederzeit für eine zuverlässige Rotation der Niederhalterwalze und damit gleichzeitig für eine zuverlässige Querförderung an den Außenabschnitten.

In einer alternativen Ausgestaltung kann vorgesehen sein, dass der Außenabschnitt bzw. die beiden Außenabschnitte angetrieben sind und dass der Mittenabschnitt nur vom Gutstrom angetrieben wird. Ggf. kann auf diese Weise eine variable Gutförderung erreicht werden, bspw. in Abhängigkeit von der Art oder der Menge des aufzunehmenden Erntegutes bzw. dessen typischer Halmlänge.

Der Niederhalterrotor kann in vorteilhafter Weise bspw. aus Kunststoff oder aus Stahl bestehen und kann ggf. eine Federlagerung o. dgl. aufweisen, die für eine Andrückung in Richtung der Gutaufnehmerwalze sorgt. Der Erntegutaufnehmer ist bspw. eine Pick-Up, ein Schneidwerk, ein Maispflücker o. dgl. Der Niederhalterrotor befindet sich vorzugsweise stromaufwärts des Erntegutaufnehmers. Der Erntegutaufnehmer arbeitet typischerweise über Kopf, so dass sich der Niederhalterrotor vor und oberhalb des Erntegutaufnehmerrotors befindet.

Bei einem angetriebenen Niederhalterrotor kann es weiterhin von Vorteil sein, wenn die Drehrichtung bedarfsgerecht umgekehrt werden kann, um bspw. eine Verstopfung im Gutaufnehmer durch Umkehrung der Drehrichtung schnell entfernen zu können, ohne dass hierzu ein manueller Eingriff notwendig ist.

In der Zeichnung ist ein nachfolgend näher beschriebenes Ausführungsbeispiel der Erfindung dargestellt. Es zeigt:
- Fig. 1: eine Erntebergungsmaschine mit einem frontseitigen Erntegutaufnehmer in Seitenansicht und schematischer Darstellung,
- Fig. 2: den Erntegutaufnehmer mit einem erfindungsgemäßen Niederhalterrotor in schematischer Seitenansicht und
- Fig. 3: den Erntegutaufnehmer nach Figuren 1 und 2 in einer schematischen Ansicht von oben.

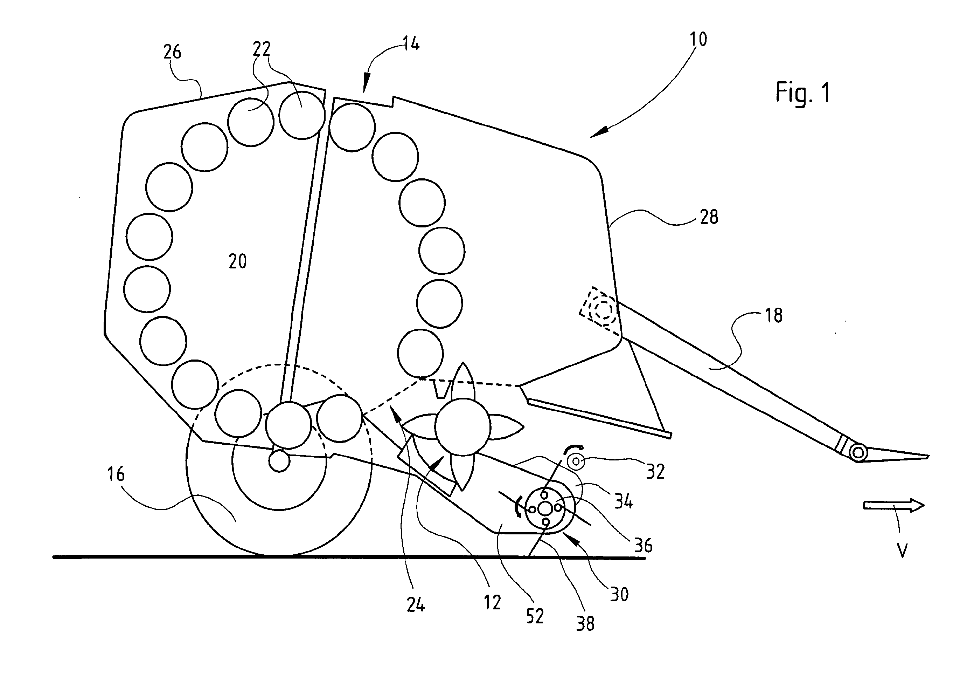

Figur 1 zeigt eine Erntebergungsmaschine 10 mit einem Gutaufnehmer 30 an einer vorderen unteren Seite, der sich über die gesamte Arbeitsbreite der Erntebergungsmaschine 10 erstreckt.

Die Erntebergungsmaschine 10 ist im vorliegenden Ausführungsbeispiel in der Form einer Rundballenpresse ausgeführt, könnte aber auch ein Ladewagen, ein Feldhäcksler, eine Großballenpresse und dgl. sein, bei denen das aufzunehmende Gut zerkleinert wird.

Die Erntebergungsmaschine 10 ist von bekannter Bauart und umfasst einen Rahmen 14, der sich über Räder 16 auf den Boden abstützt und mittels einer Deichsel 18 an ein nicht gezeigtes Zugfahrzeug angehängt werden kann. Eine Vorschubrichtung V der Maschine 10 ist durch einen nach rechts zeigenden Pfeil angedeutet. Der Rahmen 14 trägt eine Presskammer 20, die von Rollen 22 umgeben wird und einen Einlass 24 aufweist. Die Rollen 22 sind auf einer Kreislinie angeordnet und erstrecken sich eines Teils in einer vertikalen schwenkbaren Heckklappe 26 und andern Teils in einem starren Gehäuse 28. An der Unterseite des Gehäuses 28 und dem Einlass 24 vorgelagert befindet sich der Gutaufnehmer 30, dem stromabwärts eine Schneidvorrichtung 12 folgt.

Die Aufgabe der Erntebergungsmaschine 10 besteht darin, auf dem Boden liegendes Erntegut, meist Gras, Heu oder Stroh, mittels des Gutaufnehmers 30 aufzunehmen, es mittels der Schneidvorrichtung 12 in kleine Stücke zu schneiden und in die Presskammer 20 zu fördern, wo es zu einem kompakten Ballen gepresst wird. Durch das Öffnen der Heckklappe 26 wird der Ballen auf den Boden abgegeben und kann weiter verarbeitet werden.

Die Schneidvorrichtung 12 ist im Wesentlichen ebenfalls von bekanntem Aufbau und enthält einen hier nicht dargestellten Rahmen sowie eine Förderfläche, Messer, Abstreifer, ggf. Stellelemente und ggf. einen Sensor.

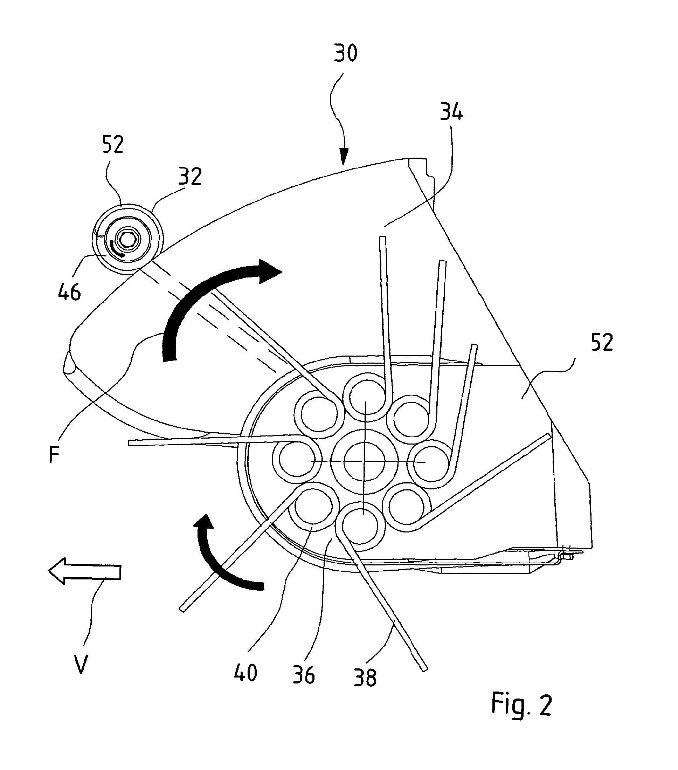

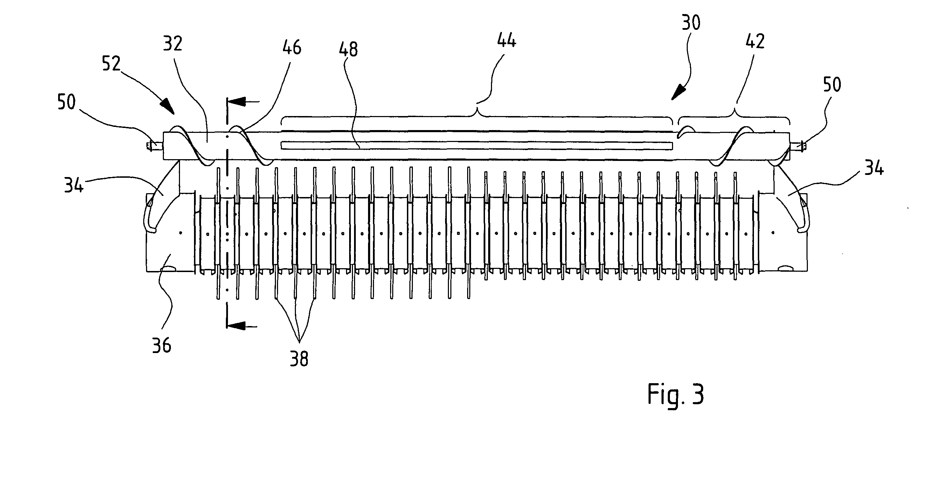

Der Gutaufnehmer 30 umfasst einen Aufnehmerrotor 36 mit einer Vielzahl von an dessen Umfang befestigten Zinken 38, der das Erntegut oberschlächtig, d.h. über Kopf fördert, was durch einen entsprechenden Drehrichtungspfeil angedeutet ist. Die Zinken 38 sind jeweils an Federn 40 flexibel aufgehängt (vgl. Figuren 2 und 3). Der Aufnehmerrotor 36 ist in einem Aufnehmerrahmen 52 drehbar gelagert und mit dessen Hilfe vorzugsweise in seiner Höhe über dem Boden einstellbar. Seitlich der beiden Enden des Aufnehmerrotors 36 des Gutaufnehmers 30 sind Leitbleche 34 vorgesehen, die verhindern sollen, dass das aufgenommene Gut seitlich vom Gutaufnehmer 30 herunter fällt und anschließend nicht mehr erfasst wird. Dem Gutaufnehmer 30 ist weiterhin ein ebenfalls am Aufnehmerrahmen drehbar gelagerter Niederhalterrotor 32 zugeordnet, der in entgegengesetzter Richtung zum Gutaufnehmer 30 rotiert. Der Niederhalterrotor 32 ist in Vorschubrichtung V schräg oberhalb des Aufnehmers angeordnet, befindet sich also stromaufwärts des Aufnehmerrotors 36.

Der vom Erntegut in Rotation versetzte bzw. aktiv angetriebene Niederhalterrotor 32 sorgt für einen zuverlässigen und gleichmäßigen Gutfluss des aufgenommenen und in Richtung der Schneidvorrichtung 12 geförderten Gutes und verhindert weitest gehend Verstopfungen, die zu einer unerwünschten Unterbrechung der Gutförderung und damit zu Arbeitszeitverlusten führen können. Insbesondere sorgt der Niederhalterrotor 32 dafür, dass sich das Erntegut nicht in den Seitenbereichen des Gutaufnehmers 30 verfängt. Ein Ausführungsbeispiel des Niederhalterrotors 32 und seine Anordnung relativ zum Aufnehmer wird anhand der Figuren 2 und 3 näher beschrieben.

Figur 2 zeigt in einer schematischen Seitenansicht den Gutaufnehmer 30 mit dem erfindungsgemäßen Niederhalterrotor 32, der stromaufwärts des Aufnehmerrotors 36 und schräg oberhalb von diesem angeordnet ist. Wie insbesondere anhand der Draufsicht der Figur 3 erkennbar ist, rotieren Aufnehmerrotor 36 und Niederhalterrotor 32 achsparallel zueinander und in einer zueinander gegensinnigen Drehrichtung. Die Drehrichtungen sind in Figur 1 und Figur 2 jeweils durch entsprechende Pfeile angedeutet. Die Förderrichtung F des aufgenommenen Gutes ist durch einen Pfeil in Figur 2 angedeutet. Wenn eine Verstopfung des Gutaufnehmers 30 diesen zu blockieren droht, kann vorzugsweise die Drehrichtung zumindest des Aufnehmerrotors 36 umgekehrt werden. Bei angetriebenem Niederhalterrotor 32 kann vorzugsweise gleichzeitig auch dessen Drehrichtung umgekehrt werden.

Der Niederhalterrotor 32 hat eine walzenförmige Kontur und erstreckt sich annähernd über die gleiche Länge wie der Aufnehmerrotor 36. Der Niederhalterrotor 32 weist über seine Länge drei Abschnitte auf, nämlich einen relativ breiten mittleren Abschnitt 44 zur Förderung oder Führung des Erntegutes in Umfangsrichtung und zwei schmälere Außenabschnitte 42, die jeweils eine Querfördereinrichtung 52 enthalten.

Die Querfördereinrichtungen 52 sind im gezeigten Ausführungsbeispiel jeweils als Schnecken 46 ausgebildet, die dem geförderten Gut eine axiale Bewegungskomponente in Richtung zum mittleren Abschnitt 44 geben. Die axiale Bewegungskomponente ist somit zur Mitte des Gutaufnehmers 30 gerichtet, fördert einerseits den störungsfreien Gutfluss und verhindert andererseits, dass sich aufgenommenes Gut an den Seiten des Aufnehmerrotors 36 verfängt und zu Verstopfungen führt bzw. vom Gutaufnehmer 30 seitlich herunter fällt. Diese Wirkung wird zudem von den fest stehenden Leitblechen 34 zu beiden Seiten des Aufnehmerrotors 36 unterstützt, deren vordere Abschnitte bis innerhalb der Außenabschnitte 42 des Niederhalterrotors 32 reichen.

In dem breiteren mittleren Abschnitt 44 des Niederhalterrotors 32 sind Mitnehmer 48 in Form von Mitnehmerstegen bzw. Rippen angeordnet, die für eine Förderung des Erntegutes bzw. für einen Antrieb des Niederhalterrotors 32 vom geförderten Erntegut sorgen. Im gezeigten Ausführungsbeispiel erstrecken sich die Mitnehmer 48 jeweils annähernd über die ganze Breite des mittleren Abschnitts 44. Die Mitnehmer 48 sind relativ flach und breit ausgebildet und nehmen ungefähr 30 bis 50 % des Walzenumfanges ein. Anstatt der gezeigten Mitnehmer 48 kann der Niederhalterrotor 32 alternativ auch mit Fingern, Rippen oder anderen geeigneten Elementen versehen sein, die für einen Eingriff mit dem geförderten Erntegut sorgen.

In einer ersten Variante des erfindungsgemäßen Gutaufnehmers 30 wird der Niederhalterrotor 32 ausschließlich durch das geförderte Gut in Rotation versetzt, wozu die Mitnehmer 48 dienen. Die Schnecken 46 an den beiden Außenabschnitten 42 bewirken die axiale Bewegungskomponente des Gutes in Richtung zum mittleren Abschnitt 44. Alternativ hierzu kann der einteilige Niederhalterrotor 32 einen Antrieb aufweisen.

In einer Variante der Erfindung können die seitlichen Querfördereinrichtungen 52 getrennt vom mittleren Abschnitt 44 mit den Mitnehmern angetrieben sein, bzw. können sich mit erhöhter Umdrehungsgeschwindigkeit drehen. In diesem Fall muss der Niederhalterrotor 32 mehrteilig ausgeführt sein. Die wenigstens drei Teile rotieren jedoch weiterhin um die gleiche Achse.

Der Niederhalterrotor 32 kann höhenbeweglich und vorzugsweise federbelastet ausgebildet sein, so dass bei größeren Erntegutportionen ein Ausweichen nach oben möglich ist. An seinen beiden äußeren Enden weist der Niederhalterrotor 32 jeweils einen Lagerzapfen 50 auf, mit denen er vorzugsweise jeweils an einem nicht gezeigten beweglichen Ausleger des Aufnehmerrahmens 52 befestigt ist. Ein solcher Ausleger kann bspw. den Niederhalterrotor 32 mittels Federkraft in Richtung des Aufnehmerrotors 36 drücken. Ggf. kann auch eine hydraulische oder pneumatische Stelleinrichtung vorgesehen sein, mit der der Abstand des Niederhalterrotors 32 zu dem Aufnehmerrotor 36 justiert werden kann. Diese Justage kann entweder durch manuelle Vorgabe oder auch sensorgesteuert erfolgen.

## Patentansprüche

1. Gutaufnehmer (30) mit einem quer zu seiner Aufnahmerichtung rotierenden Niederhalterrotor (32), der wenigstens einen zumindest bis an ein seitliches Ende des Gutaufnehmers (30) reichenden Außenabschnitt (42) aufweist, **dadurch gekennzeichnet, dass** der wenigstens eine Außenabschnitt (42) eine Querfördereinrichtung 52 zur Erzeugung einer von dem seitlichen Ende des Gutaufnehmers (30) weg gerichteten axialen Bewegungskomponente für gefördertes Gut aufweist.

2. Gutaufnehmer nach Anspruch 1, **gekennzeichnet durch** zwei jeweils bis an die seitlichen Enden des Gutaufnehmers (30) reichende Außenabschnitte (42) des Niederhalterrotors (32) mit jeweils einer Querfördereinrichtung 52.

3. Gutaufnehmer nach Anspruch 1 oder 2, **dadurch gekennzeichnet, dass** die Querfördereinrichtungen 52 jeweils als Schnecken (46) ausgebildet sind.

4. Gutaufnehmer nach Anspruch 3, **dadurch gekennzeichnet, dass** die Schnecken (46) jeweils eine gegenläufige Förderrichtung aufweisen.

5. Gutaufnehmer nach einem oder mehreren der vorherigen Ansprüche, **dadurch gekennzeichnet, dass** die Querfördereinrichtungen 52 als spiralförmig angeordnete Stege ausgebildet sind.

6. Gutaufnehmer nach einem oder mehreren der vorherigen Ansprüche, **dadurch gekennzeichnet, dass** der Niederhalterrotor (32) einen mittleren Abschnitt (44) ohne Querfördereinrichtungen 52 aufweist.

7. Gutaufnehmer nach Anspruch 6, **dadurch gekennzeichnet, dass** der mittlere Abschnitt (44) Mitnehmer 48 aufweist.

8. Gutaufnehmer nach Anspruch 6 oder 7, **dadurch gekennzeichnet, dass** die Mitnehmer 48 als Zinken, Mitnehmerstege, Rippen o. dgl. ausgebildet sind.

9. Gutaufnehmer nach einem oder mehreren der vorherigen Ansprüche, **dadurch gekennzeichnet, dass** der Niederhalterrotor (32) vom Gutstrom in Rotation versetzt ist.

10. Gutaufnehmer nach einem oder mehreren der vorherigen Ansprüche, **dadurch gekennzeichnet, dass** zumindest der wenigstens eine Außenabschnitt (42) angetrieben ist.

11. Gutaufnehmer nach einem oder mehreren der vorherigen Ansprüche, **gekennzeichnet durch** eine gegenläufige Rotation des Niederhalterrotors (32) und eines Aufnehmerrotors (36) des Gutaufnehmers (30).

12. Gutaufnehmer nach einem oder mehreren der vorherigen Ansprüche, **dadurch gekennzeichnet, dass** ein Abstand zwischen dem Niederhalterrotor (32) und dem Aufnehmerrotor (36) variabel ist.

13. Gutaufnehmer nach Anspruch 12, **dadurch gekennzeichnet, dass** zumindest der Niederhalterrotor (32) höhenbeweglich und vorzugsweise federbelastet ist.

14. Gutaufnehmer nach einem oder mehreren der vorherigen Ansprüche, **dadurch gekennzeichnet, dass** der Niederhalterrotor (32) aus Kunststoff und/oder Stahl gefertigt ist.

15. Gutaufnehmer nach einem oder mehreren der vorherigen Ansprüche, **dadurch gekennzeichnet, dass** der Gutaufnehmer (30) eine Pick-Up, ein Schneidwerk, ein Maispflücker o. dgl. ist.

16. Gutaufnehmer nach einem oder mehreren der vorherigen Ansprüche, **dadurch gekennzeichnet, dass** der Gutaufnehmer (30) höhenverstellbar ist.
